# NEW EUROPEAN PATENT SPECIFICATION

(11) **EP 1 662 706 B2**
(45) Date of publication and mention of the opposition decision: **08.01.2014**
(45) Mention of the grant of the patent: 23.03.2011
(21) Application number: 03817901.6
(22) Date of filing: 06.08.2003
(51) Int. Cl.: H04L 12/701

(54) **A METHOD OF AUTOMATIC PROTECTION SWITCHING**
VERFAHREN ZUR AUTOMATISCHEN SCHUTZUMSCHALTUNG
PROCÉDÉ DE COMMUTATION AUTOMATIQUE DE PROTECTION

(43) Date of publication of application: 31.05.2006
(73) Proprietor: ZTE Corporation, 518057 Shenzhen, Guangdong (CN)
(72) Inventor: MO, Li, ZTE Plaza, Nanshan Dist, Shenzhen, Guangdong 518057 (CN); JIA, Minghong, ZTE Plaza, Nanshan Dist, Shenzhen, Guangdong 518057 (CN)
(74) Representative: Pellkofer, Dieter
(86) International application number: PCT/CN2003/000633
(87) International publication number: WO 2005/015834

(56) References cited:
- WO-A-00/55997
- WO-A2-02/09349
- US-A1- 2002 080 723
- US-A1- 2002 141 344
- US-A1- 2002 172 149
- US-B1- 6 321 271

## Description

### FIELD OF THE INVENTION

The present invention relates to communication field, specifically to a method for automatic protection switching when a failure happens to a physical channel during a data transmission process, and more specifically, relates to a method for automatic protection switching for a forwarding path established basing on link status of routing protocols.

### BACKGROUND

It is well known that in a process for transmitting data, a frame (also named packet) commonly needs to pass through a number of nodes to go to its destination. If the forwarding path for the frame is unconnected and set up by routing protocols, each node makes forwarding decision according to the frame head and information on a routing database. The routing database is built up by intradomain routing protocols and inter-domain routing protocols.

A frame will pass through a number of autonomous systems while going forward to its destination. The frame is leaded to the destination by intradomain routing protocols in each autonomous system. At present, there are two intradomain routing protocols adopted. One is a routing protocol based on distance vector, such as a Routing Information Protocol (RIP); the other is a routing protocol based on link-state, such as an Open Shortest Path First Protocol (OSPF), and a Intermediate System-to-Intermediate System (IS-IS) developed by the ISO, which is a intradomain routing protocol. For an intradomain routing protocol based on link-state, a route information database contains detailed topology information on the domain.

US 2002/141344 A1 discloses a methodology for controlled switchover of unicast and multicast data flows in a packet based switching system.

In current networks, all of forwarding paths are established by routing protocols.

If any failure happens in a network, the network will stop forwarding a frame and recalculate the routing database. Usually, while a data device detects a failure happening to a service port, the data device informs the routing protocol to recalculate a new path, and stop forwarding a frame at the port at the same time. When the protocol finds a new path to forward a frame, the network recovers services. For recalculating the routing database, a plenty of information on nodes need to be shared in the network. Hereby, it takes several minutes, even decades of minutes, to recover the network from a failure. With a quick development of the data service, it requires a shorter and shorter time to recover the network from failures. For example, a network adopting the Internet Protocol (IP) technology cannot meets the requirements. Thus there is an urgent need to develop a method that can carry out direct protection switching on detected nodes without a requirement for recounting routing database.

### SUMMARY OF INVENTION

To solve the technical problems, the present invention is to provide a method for automatic protection switching, which can carry out protection switching directly on detected nodes when failures happen in the network, without a requirement of recounting routing database, in order to lower recovery time.

The method for automatic protection switching of the present invention comprises the steps of claim 1.

The method for automatic protection switching of the present invention provides rapid protection switching, which can carry out protection switching on detected nodes when a failure is detected in the network, and thus all subsequent data frames can be protected. Data frames all will be forwarded to destinations if destination nodes still exist. The present invention is suitable to intradomain routing protocols based on link-state, especially to OSPF with forwarding paths calculated by Dijkstra algorithm or forwarding paths build by IS-IS protocols.

The present invention implements protection for data service on the millisecond level, in which the time for protection switching corresponds to the time for failure detection, and there is no need to introduce new protocols or modify existing route protocols, so that service capability of data services is highly enhanced, users' requirements for highly reliable services is satisfied, and, additionally, non-burst non-pocket service may be built on the basis of data equipments. In a word, the present invention overcomes a long-term shortcoming in the data transmission process, improve the reliability in data equipments and enlarge its field of application.

### BRIEF DESCRIPTION OF THE DRAWINGS

FIG. 1 is a flow chart of the method according to the present invention;
FIG. 2 is a topological graph of a network in one embodiment according to the present invention;
FIG. 3 is a flow chart for establishing a protecting path according to the present invention;
FIG. 4 is a schematic graph showing the minimum spanning tree in one embodiment according to the present invention;
FIG. 5 is a schematic graph of searching the root of the minimum spanning tree in one embodiment according to the present invention;
FIG. 6 is a schematic graph showing a sorted minimum spanning tree after sorted in one embodiment according to the present invention;
FIG 7 is a schematic graph showing how to assign loop sequence number to nontree edges in one embodiment according to the present invention;
FIG. 8 is a schematic graph showing how to assign loop sequence number to tree edges in one embodiment according to the present invention;
FIG. 9 is a schematic graph showing how to process loop composition in network according to FIG 2;
FIG. 10 is a schematic graph showing Node ST sequence number according to one embodiment according to the present invention;
FIG. 11 is a schematic graph showing a forwarding path from S to T in one embodiment according to the present invention;
FIG. 12 is a schematic graph showing a forwarding path from T to S in one embodiment according to the present invention;
FIG. 13 is a schematic graph showing a format of the frame header in one embodiment according to the present invention;
FIG. 14 is a flow chart of processing a frame as the link fails in one embodiment according to the present invention;
FIG. 15 is a flow chart for forwarding a frame in one embodiment according to the present invention;
FIG. 16 is a flow chart adopting a standard forwarding table in FIG 15 in one embodiment according to the present invention;
FIG 17 is a flow chart adopting a forwarding stable from T to S in FIG. 15 in one embodiment according to the present invention; and
FIG. 18 is a flow chart adopting a forwarding table from S to T in Fig. 15 in one embodiment of the present invention.

### DETAILED DESCRIPTION OF THE PREFERRED EMBODIMENT

The present invention will be further described below in details in accompanying with the drawings and embodiments.

It is known that when a frame is forwarded along the path of OSPF or IS-IS protocols in hop-by-hop model, if a node or link fails, the process of protection switching will take a long time, up to minutes level, and all frames will lost during the process of protection switching. When implementing a protection switching by a prior art, the routing protocol needs to be reconverged before forwarding more data frames, which leads to an increase in the switching time.

The present invention provides a new method of automatic protection switching, which provides a rapid protection for forwarding a frame by building a protection path within a network; the present invention sets up in the frame header three special bits for protection switching to make a decision on forwarding the frame, and switches the frame to the protection path while link fails.

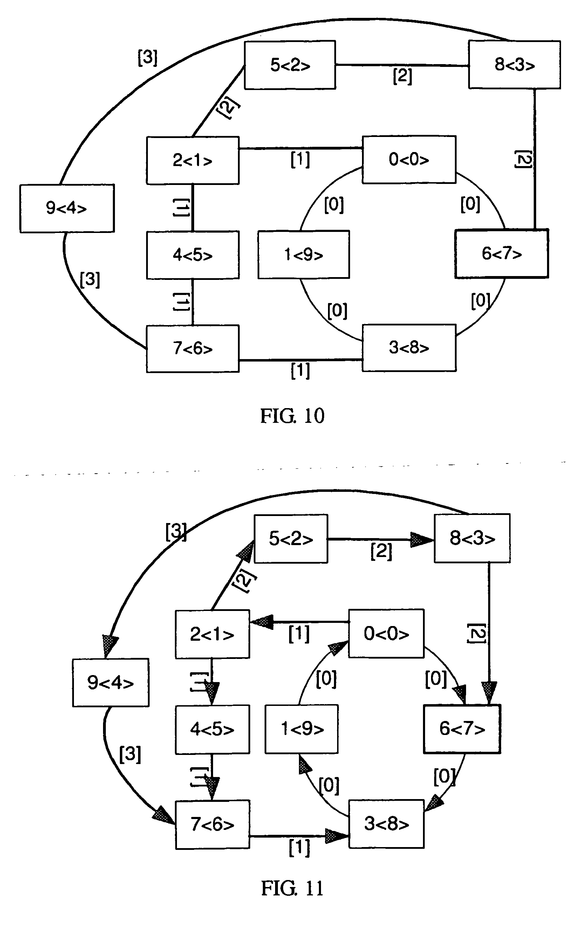

The present invention also supplies two special nodes : Node S and Node T, both nodes are illustrated in FIG. 10.

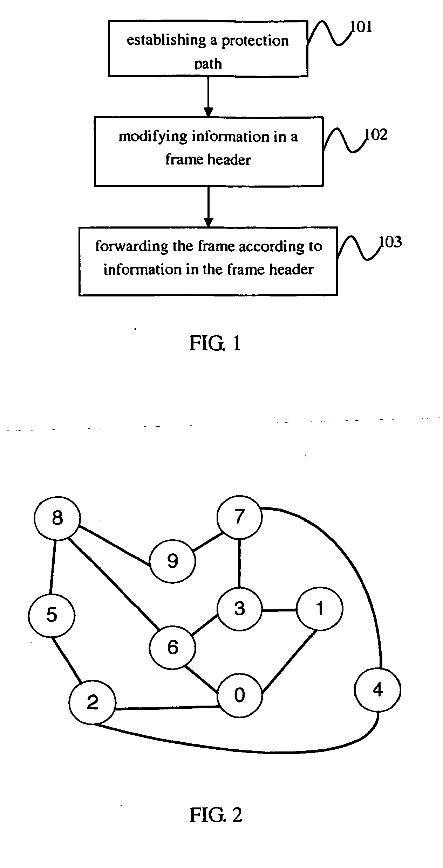

Figure 1 illustrates the flow chart of the present invention. Firstly, a protection path is built in a network (step 101) and the protection path can be built when the status of network link becomes stable, or according to an administration command. Secondly, the frame head information for forwarding a frame is modified as failure happens in the link (step 102). Finally, the frame is forwarded according to frame head information (step 103) and, if the frame head information shows that the frame is in a normal state, the frame is forwarded by a normal path; and, if the frame head information shows that the frame needs to be performed process protection switching, the frame is forwarded by the protection path.

Figs. 2 to 18 illustrate one embodiment according to the present invention in details. For describing the present invention easily, the following assumptions are briefly described first.
1) Each node in a network is supposed to have a node ID, and the node ID can be transmitted to other router by a link, for example, a link built by an intradomain routing protocol based on link-state.
2) The network will not lose its connection while a single node or link fails.

The topology graph of a network in one embodiment of the present invention is shown in Figure 2. In the graph, the number with a circle represents a node, a line between nodes represents a link. In this network, there are 10 nodes, node 0, node 1, node 2, ..., node 8 and node 9 respectively, and the network is a simple graph without parallel edges and with at least 2 vertexes connected.

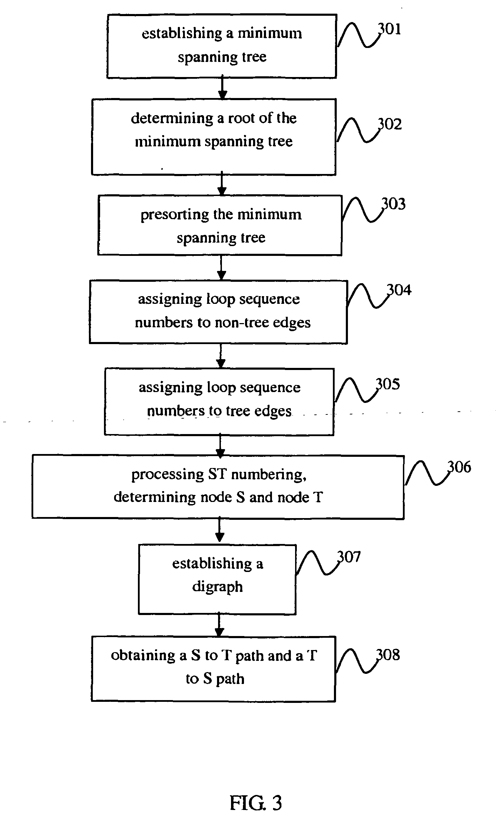

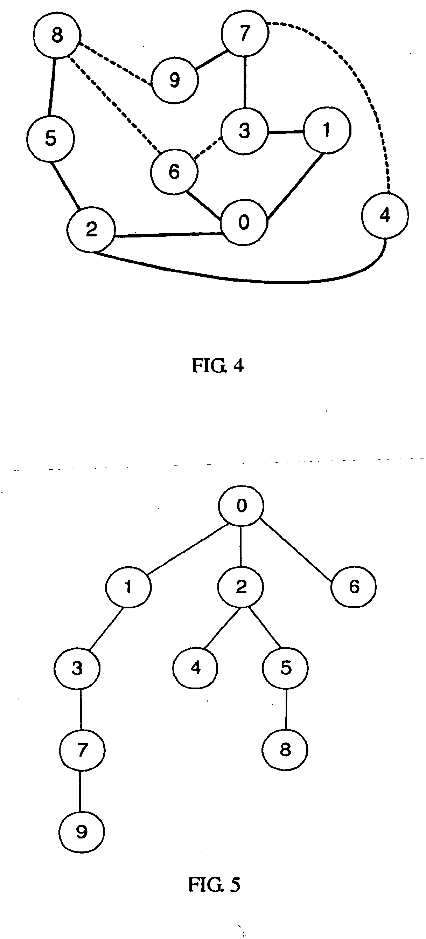

In the present invention, the protection switching for forwarding a frame is achieved by establishing a protection path, so the present invention is based on how to establish the protection path. FIG. 3 shows a flow chart for establishing a protection path according to the present invention. Firstly, a topological graph implements loop decomposition, including to establish minimum spanning tree (step 301); to determine the root of the minimum spanning tree (step 302); to pre-sort the minimum spanning tree (step 303); to assign sequence numbers to nontree edges (step 304) and to assign sequence numbers to tree edges (step 305). Secondly, after the loop decomposition, ST is numbered to give every node one ST sequence number (step 306). Then a digraph is established (step 307). Finally according to the digraph, the paths from S to T and from T to S are obtained (step 308) namely, forwarding tables from S to T and from T to S are obtained. According to FIG. 4 to FIG. 12, the above steps will be described in details as follows.

First of all, some concepts related to loop decomposition are introduced. Loop decomposition is well known in the graph theory. Usually, a loop decomposition of an undirected graph G (V,E), D = [ P₀,P₁,···P_{r-1]}, divides a graph E into an sorted set of simple paths P₀, P₁, ..., Pᵣ₋₁ (named loop) with disjointed edges, in which P₀ is a simple cycle; Pᵢ is a simple path with a end point belonging to a loop with less sequence number, and without an internal vertex belonging to the loop with less sequence number; Pᵢ (i>0) also can be a simple loop, and if it is a loop consisted of only one edge, it is called a trivial loop.

If and only if Pᵢ (i>0) has no loop, the loop decomposition is called a open loop decomposition. If and only if the graph has at least two edges connected, a loop decomposition exists. The graph with two edges connected can provide protection to failures in link, but is unable to provide protection to failures on nodes. If and only if the graph is at least biconnected, namely the graph has two vertexes connected, there exists an open loop decomposition. In a biconnected network, both protection for node and link failures can be provided. The present invention relates to the biconnected network that can implement open loop decomposition, and FIG. 2 is a biconnected network. It is noted that when the same graph is carried out loop decomposition by current techniqies, the result is generally not a single.

Regarding protection for forwarding a frame by a route, each node in the intradomain must educe same loop decompsition, so that S to T path and T to S path can be established correctly inside the network. That is, in the present invention, each database node working at same link status inside the network must educe same loop decomposition. To approach such aim, the prevent invention improves on the related steps about loop decomposition and will be described in more details in the following.

FIG. 4 is a graph of the minimum spanning tree of the network in FIG. 2, in which the solid lines represent tree edges, and dotted lines represent non-tree edges. In the present invention, the minimum spanning tree is established based on Shortest Path First SPF algorithm. For obtaining the same minimum spanning tree on every node on which the task of establishing minimum spanning tree must be implemented independently, and utilizing the same link status database spread through routing protocols, the present invention defines an input of SPF algorithm, namely edge (link) weight of the undirected graph, as a triad *{w, s*, *l*}, in which *w* is a link weight, and adopts in a routing protocol based on link status; s is the less one of two node addresses attached to the edge (link); and *l* is the greater one of two node addresses attached to the edge (link). Thus the weight of each edge in the graph is single, and the minimum spanning tree established is also single. When *(wₓ* > *w_{y})* ∥ ((*wₓ* = = *w_{y}*) & (*sₓ* > *s_{y}*)) ∥ ((*wₓ* = = *w_{y}*) & (*sₓ* = = *s_{y}*)) & (*lₓ* > *l_{y}*)), the weight of edge *x (wₓ, sₓ, lₓ*) can be considered greater than the weight of edge *y (w_{y}, s_{y}*, *l_{y}*).

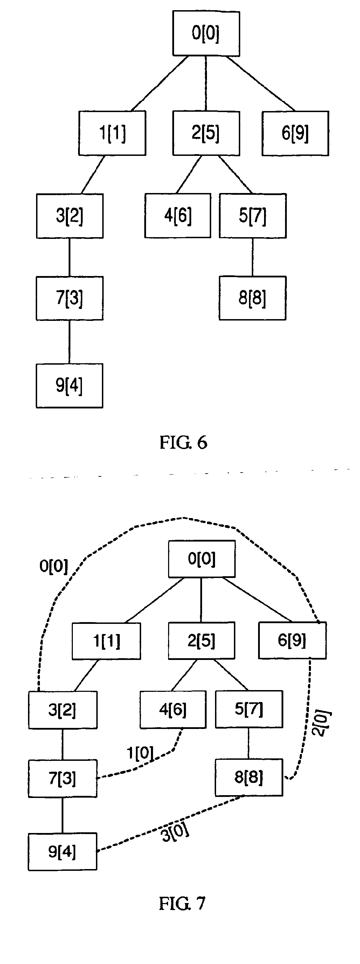

After the minimum spanning tree is obtained, the next step is searching a root of the minimum spanning tree. Similarly, there are many methods for searching the root of the tree. To ensure same loop decomposition on every nodes, the minimum spanning tree will search its root according to following steps. As shown in FIG. 5, firstly all nodes are sorted in an ascending order according to the node IDs, and a table composed of sorted nodes is yielded, called sorted table *Vr.* In the embodiment, the sorted table *Vr* is {0,1,2,3,4,5,6,7,8,9}. The tree construction T having the least node ID in the table *Vr* is initialized, and the initial value of the tree construction T is the node that has the least node ID in the table *Vr*, namely Node 0 in FIG. 5. The vertex from the tree construction T is deleted from the sorted table *Vr* , then the first vertex that is connected to T by tree edge in table *Vr* is determined and appended into the tree construction T, and this vertex is deleted from the sorted table *Vr*. Selecting order is determined based on branch order of father nodes, untill the table *Vr* is emptied, thus nodes 1, 2, 6, 3, 4, 5, 7, 8 and 9 are appended into the tree construction T in turn. A longest distance from root to leaf is defined as the depth of a tree, and during the process of appending each vertex. If the least difference of tree depth among different branches is 2, tree is rotated to keep balance. Rotating the tree can reduce the tree depth. The difference can be no more than 2 by rotating tree again and again. After rotated, the branch order will be determined according to the new tree structure. Next, the minimum spanning tree is pre-sorted. The steps for presorting are as follows: number 0 is assigned as the root vertex of the minimum spanning tree, for any vertex *v* beginning with root vertex, there are multiple branches from vertex branches with subscript 0 to maximum, in which branch subscript without subgraph is neglected, namely null branch generated by rotating the tree, and then presort traversing is processed to all branches circularly, namely proceeding from branch subscript 0 to maximum gradually. In each branch, branch subscript and subsequence is visited first, and then subsequence will keep on loop called, while a whole subgraph is completed traversed, presort traversing is processed in a next branch. Thus, vertexes that start at the root vertex will be numbered one after the other while first visiting. In the present embodiment, sequence number 0 is assigned as the root vertex, then numbering begins from the root node, and node sequence number is setup. Each branch is arranged with a sequence number, and, if a branch is a leaf node, a sequence number is directly setup until all nodes are numbered. The minimum spanning tree acquired after presorted is shown in FIG. 6, in which the numbers in square brackets "[ ]" express sequence numbers.

After presorted, a step of assigning loop sequence numbers to non-tree edges is processed. For each nontree edge, its loop sequence number is the least common ancestor of the ends of the nontree edge in the minimum spanning tree, namely, each non-tree edge is marked with the sequence number of its terminal least common ancestor in the minimum spanning tree, and non-tree edges is sorted by an ascending order based on the least common ancestor.

For two vertexes *v* and *u* of a root tree, the least common ancestor *lca* is defined as a vertex , which is an ancestor of the two vertexes *v* and *u* and spaces farthest from the root vertex (node).

To obtain loop sequence number of a non-tree edge, the non-tree edge is sorted according to the weight *{w_{lca}, s, l},* in which *w_{lca}* represents presorted sequence number of the least common ancestor node, and definitions of s and 1 are given as above. Then non-tree edges are sorted in an ascending order, and the loop sequence number is the sequence number in turn. As shown in FIG. 7, 0, 1, etc. on non- tree edges represent loop sequence numbers, 0 inside square brackets represents the edge weight.

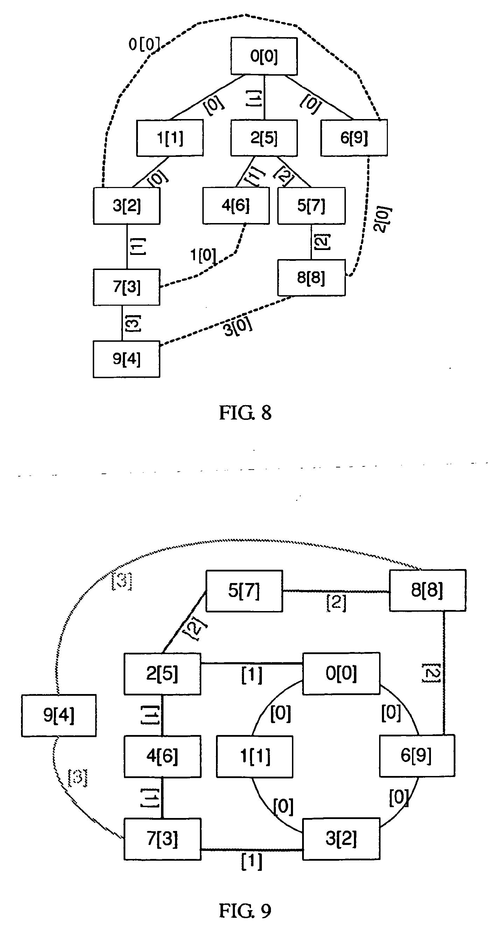

Then loop sequence numbers are assigned to tree edges. The basic conception for assigning tree edge loop sequence number is that, for tree edge *{t}* ,there are a series of non-tree edges *{f}, {t}* lies in the loop composed of *{f}* ;for the relevance *{f}* of the tree, loop sequence number of *{t}* is set same as the sequence number of the tree edge with the least sequence number in the relevant non-tree edge *{f}.* Tree edges with loop sequence numbers assigned are shown in FIG. 8, in which the value inside square brackets "[]" represents weight value of the edge from the node to its father node.

Finally, loop decomposition is completed, as shown in FIG. 9. In the present embodiment, the network graph shown in FIG. 2, is decomposed to four loops: P₀ is a loop composed by nodes 0, 1, 3 and 6, which are jointed by edges with sequence number 0; P₁ is a simple path composed by nodes 0, 2, 4, 7, and 3, which are jointed by edges with sequence number 1; P₂ is a simple path composed by nodes 2, 5, 8, and 6, which are jointed by edges with sequence number 2; P₃ is a simple path composed by nodes 8, 9 and 7, which are jointed by edges with sequence number 3.

After loop decomposition for the topography of the network, numbering ST is processed to give every node a ST sequence number. In the present invention, two special nodes are defined, one is called node S, and the other is called node T. Node S is a node with the least node ID located on the basic loop of loop decomposition; node T is a node with the least node ID among nodes that are adjacent to node S and on the basic loop of loop decomposition.

If the graph is at least 2 connected, all vertexes inside graph *G (V, E)* have ST sequence numbers, For any edges of *(s, t) ∈ E,* an sorted table for vertex *s= v₀*,*v₁*, ...,*v*_{|*v*|-*1*}= *t* can be established. For all vertexes of *vⱼ* 1<j<|V|-1, there exits i < j < k, thus, {*vᵢ, v*_{*j*}} *∈ E, (vⱼ, vₖ}* ∈ *E.* Thus, The ST sequence number of a given vertex is the subscript sequence number of the given vertex at the sorted table.

After loop decomposition of the graph, sequence numbers of vertexes can be gained. The process is briefly described as follows: firstly, node S and node T are determined according to the definitions, and, in the present embodiment, node S is defined as node 0, node T is defined as node 1. A sequence table O*ₛₜ*, of ST numbering is initialized as all nodes in loop decomposition P*₀*, which starts from node S and finishes at node T through a long path; for any P*ⱼ* (j>0), there are already two nodes on the O*ₛₜ*, so a node with a less ST number is u, the other one is v, and all nodes on P*ⱼ* are added to O*ₛₜ*, from u to v; after all loops have been processed, nodes on O*ₛₜ* are numbered in serial to generate ST sequence numbers. As shown in FIG. 10, the number in < > is the ST sequence number of the node.

After ST numbering is completed, S to T path is established. Except that at node T each frame received is forwarded to node S, S to T path can be obtained through restricting forwarding a frame in the direction of increasing node ST sequence number. After loop decomposition, digraph is established, and then Dijkstra algorithm is utilized to establish such a path along a direction of increasing ST sequence numbers for loop nodes of loop composition on the digraph. A rule to establish a digraph is as follows a direction of a basic loop P₀ is from node T to node S. on an edge between node T and node S, and on all other edges of loop P₀ remain same direction, and such an arrangement could make P₀ become an oriented circuit; on all other loops Pⱼ (j>0), directions of the graph is from a vertex with less ST sequence number to a vertex with larger ST sequence number.

It can be found according to the digraph that, from node S, every vertex in the graph can reach the digraph, this is because a vertex with less ST sequence number and less loop sequence number can always arrive at any vertex on a certain loop Pⱼ. Because node S has minimum ST sequence number and loop sequence number, any vertex on digraph is reachable. Each vertex also can reach node T located on digraph, because any vertex on a certain loop Pⱼ can always reach a vertex with larger ST sequence number and less loop sequence number. Because node T has the largest ST sequence number and the least loop sequence number, each vertex in the graph can arrive at node T in the digraph. Thus every vertex is reachable from node S, and node T is reachable from every vertex, so it is concluded that every vertex can arrive at any other vertex on the digraph considering directed link from node T and node S in the digraph.

Since each node is reachable from any other node in the digraph, for every node, routing database from S to T can be established by Dijkstra algorithm to establish S to T path inside the network.

The principle for forwarding a frame along S to T path is that: if the receiving node is node T, and meanwhile transfer path bits are configured, a frame is forwarded through T to S path, meanwhile S to T path bits are cleared, T to S path bits are configured, and transfer path bits are cleared. If a failure happens, and frames cannot be forwarded through S to T path, frames will be abandoned; otherwise, frames will be forwarded through S to T path.

Regarding T to S path, except that in node S each frame received is forwarded to node T, T to S path can be obtained through restricting forwarding a frame in a direction of decreasing ST sequence numbers of nodes. The T to S path has an opposite direction to that of S to T path, and a T to S path, which has an opposite direction, can be established on a directed path graph from S to T.The principle for forwarding a frame through T to S path is that: if the receiving node is node S, and meanwhile transfer path bits are configured, a frame is forwarded through S to T path, at this time S to T path bits are configured, T to S path bits are cleared, and transfer path bits are cleared. If a failure happens, a frame cannot be forwarded through T to S path, the frame will be abandoned; otherwise, the frame will be forwarded through T to S path.

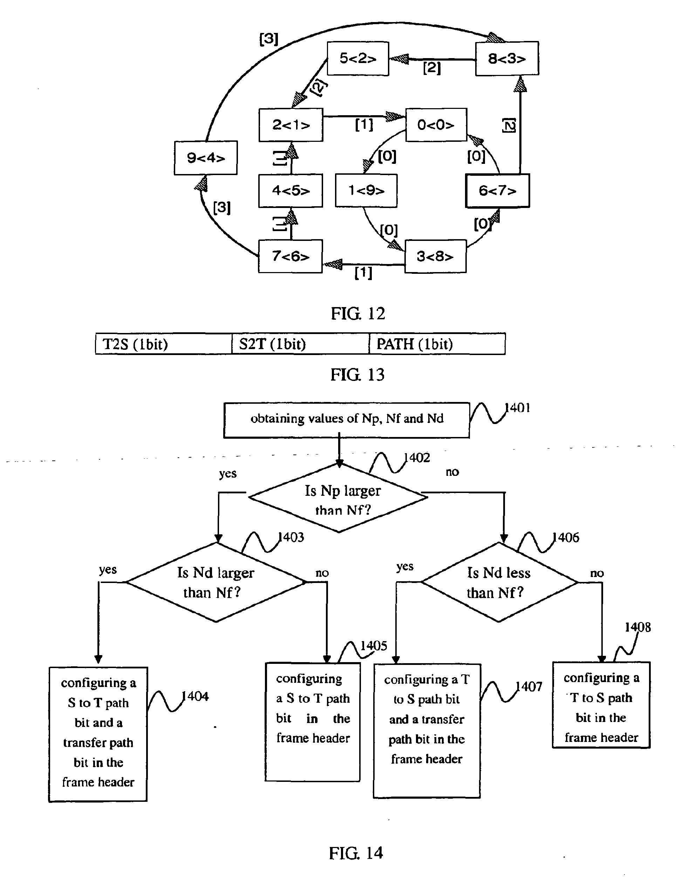

In the present embodiment, S to T path and T to S path are shown in FIG. 11 and FIG. 12. Thus, three routing databases are involved in the present invention, which are the following:
Standard path routing database, which is established by Dijktra algorithm; under normal conditions, a frame usually is forwarded along a standard path;
S to T path routing database, in which a frame is forwarded, through S to T path, at a forwarding node by instruction of a bit in a frame header, and the bit is configured by protection switching node or node S; and
T to S Path routing database, in which a frame is forwarded, through T to S path, at a forwarding node by instruction of a bit in a frame header, and the bit is configured by protection switching node or node T.

As mentioned above, to implement protection switching, a frame header needs to carry additional information, which format is shown as FIG. 13. The information includes 3 bits, which are the following:
S to T path bit(S2T): if a forwarding node receives a frame configured with S to T bit, the frame will be forwarded through S to T path;
T to S path bit(T2S): if a forwarding node receives a frame configured with T to S bit, the frame will be forwarded through T to S path; and
Transfer path bit(PATH) ): if a transfer path bit is configured at node T, T to S path is adopted, T to S path bit is configured, and S to T path bit is cleared; if a transfer path bit is configured at node S, S to T path is adopted, S to T path bit is configured, and T to S path bit is cleared. At node T or S, if a path transfer is completed, the transfer path bit will be cleared.

When a network link is normal, frames are usually not forwarded through S to T path or T to S path, but a standard path. If a standard path fails to work, a S to T path or T to S path is adopted. Here, it needs to determine to choose which path. For frames forwarded along a standard path, a protection switching node will only implement protection switching. If frames has already located on S to T path or T to S path, and if the path has been broken, the frames will be abandoned.

To determine a forwarding path while a network link failure happens, three major sequence numbers need to be introduced: *N*ₚ is ST sequence number of protection switching node for detecting failures; *N*_{D} is ST sequence number of a destination node for a frame, and the destination node locates at the frame header; and *N_{F}* is ST sequence number for a failure node or a far end node along a failure link. FIG. 14 shows a flow for processing a frame while a link failure happens. Firstly above three sequence numbers *N*ₚ*, N_{D}* and *N_{F}* are obtained (step 1401). Then, it is decided whether *N*ₚ is larger than N_{F} (step 1402), if yes, it is decided whether *N_{D}* is larger than *N_{F}* (step 1403), if yes, the frame is forwarded through S to T path, and when the frame arrives at node T, T to S path is adopted, here, two bits need to be configured in the frame header: a S to T path bit and a transfer path bit (step 1404), the latter instructs, when the frame is at node T, to transfer to a T to S path. If *N_{D}* is less than *N_{F},* the frame is forwarded through S to T path by configuring S to T path bit in the frame header (step 1405). If *N_{P}* is less than *N_{F},* the frame is forwarded through T to S path while *N_{D}* is less than *N_{F}* (step 1406), and when the frame arrives at S node, T to S path is adopted. At this time, two bits need to be configured: a T to S path bit and a transfer path bit (step 1407), the latter instructs, when the frame is at node S, to transfer to a S to T path. If *N_{D}* is larger than *N_{F}* (step 1406), the frame is forwarded through T to S path by configuring T to S path bit in the frame header (step 1408).

*If N_{D}* equals to *N_{F},* namely the sequence number of the failure node is the ST sequence number of the destination node, that is to say the node is a link failure node. If failure happens to the destination node, the frame cannot be forwarded. *If Nₚ* is less than *N_{F},* because the failure node can not be approached from a less ST sequence number, the frame needs to be forwarded through a T to S path; *if Nₚ* is larger than *N_{F},* because the failure node can not be approached from a larger ST sequence number, the frame needs to be forwarded through a S to T path.

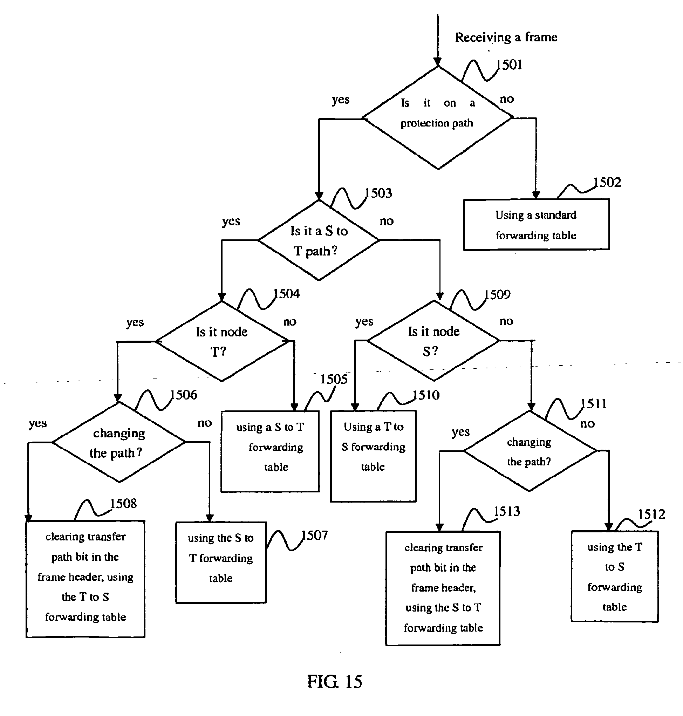

Finally, the frame is forwarded according to the frame header information and the node state. FIG. 15 provides a flow chart for forwarding a frame. After a receiving node has received a forwarded frame, it is to determined whether the frame is on a protection path (step 1501) according to additional information in a header of the frame, if the frame is not on a protection path, it will be forwarded by using a standard forwarding table along a standard path (step 1502). If the frame is on a protection path, it is further determined whether the frame is on a S to T path (step 1503), if yes, it is determined whether the current node is node T (step 1504), if not, the frame is forwarded by using a S to T forwarding table (step 1505), if the current node is node T, it is determined whether the path needs to be changed (step 1506), if not, the frame is forwarded by using a S to T forwarding table (step 1507), if the path needs to be changed, the frame is forwarded by using a T to S forwarding table, and the transfer path bit is cleared from the frame header (step 1508). If the frame is on a T to S path, it is determined whether the current node is S node (step 1509), if yes, the frame is forwarded by using a T to S forwarding table (step 1510); if the current node is not a node S, it is determined whether the path needs to be changed (step 1511), if not, the frame is forwarded by using a T to S forwarding table (step 1512); if the path needs to be changed, the frame is forwarded by using a S to T forwarding table, and the transfer path bit is cleared from the frame header (step 1513).

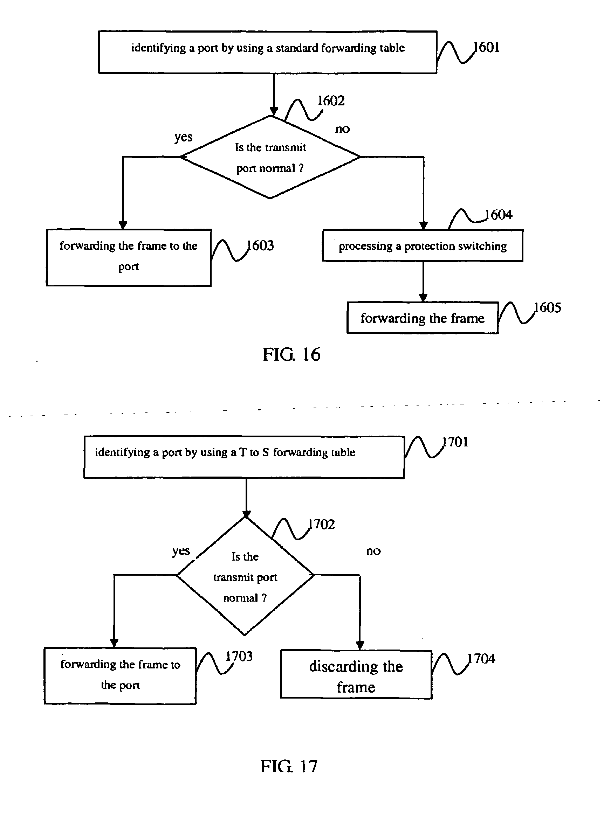

FIG. 16 is a flow chart for forwarding a frame by using a standard forwarding stable. Firstly, a port is identified by a standard forwarding table (step 1601), then, it is determined whether the transmit port is normal (step 1602), if yes, the frame is forwarded to the port (step 1603); if the transmit port is abnormal, a protection switching is processed (step 1604) for forwarding the frame (step 1605).

FIG. 17 is a flow chart for forwarding a frame by T to S forwarding table. Firstly, a port is identified by a T to S forwarding table (step 1701), if the forwarding port is normal (step 1702), the frame is forwarded to the port (step 1703); if the forwarding port is abnormal (step 1702), the frame is abandoned (step 1704).

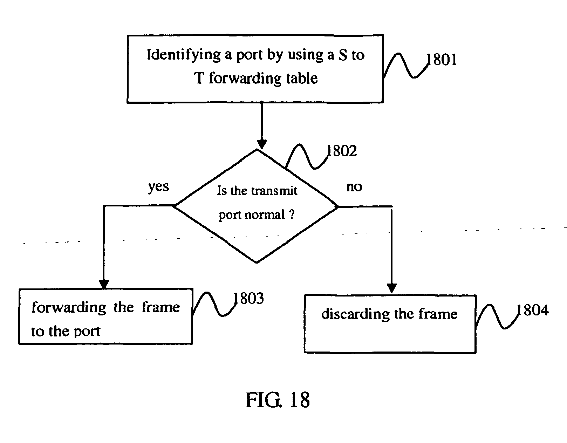

FIG. 18 is a flow chart for forwarding a frame by S to T forwarding table. Firstly, a port is identified by a S to T forwarding table (step 1801), if the forwarding port is normal (step 1802), the frame is forwarded to the port (step 1803); if the forwarding port is abnormal (step 1802); the frame is abandoned (step 1804).

It should be noted at the final that the embodiments mentioned above are for describing the technical solutions in the present invention but not intend to limit the invention.

## Claims

1. Method for automatic protection switching in a network comprising nodes and links between nodes when a failure happens to a physical channel between the nodes during a data transmission for a forward path established based on link status information of routing protocols in a routing database, the method is performed by data equipment, and the method comprises the following steps of:
establishing protection paths in the network (101);
modifying information in a frame header for forwarding a frame (102), when a network link fails; and
forwarding the frame according to the information in the frame header (103), if the information in the frame header shows a normal state, forwarding the frame by a normal path, and if the information in the frame header shows that a protection switching is needed, forwarding the frame by the protection path, **characterized in that**
the step of establishing protection paths in a network further comprises the following steps of:
a step of processing loop decomposition for a topological graph of the network;
a step of processing ST numbering to give every node a ST sequence number (306); and
a step of establishing a S to T Path and a T to S Path (308).

2. The method for automatic protection switching of claim 1, wherein the step of processing loop decomposition for a topological graph of the network further comprises the following steps of:
a step of establishing a minimum spanning tree (301);
a step of determining a root of the minimum spanning tree (302);
a step of presorting the minimum spanning tree (303);
a step of assigning loop sequence numbers to non-tree edges (304);
and
a step of assigning loop sequence numbers to tree edges (305).

3. The method for automatic protection switching of claim 2, wherein the step of establishing a minimum spanning tree further comprises the following steps of:
defining a edge weight as a triad {w, s, l}, in which w is a link weight used for a routing-protocol based on link status, s is a lesser one of two node addresses connected by the edge, and l is a larger one of the two node addresses connected by the edge; and
establishing the minimum spanning tree according to shortest path first algorithm.

4. The method for automatic protection switching of claim 2, wherein the step of determining a root of the minimum spanning tree further comprises the following steps of:
sorting all nodes in an ascending order according to node IDs to form a table of sorted nodes;
initializing a tree construction T with a least node ID in the table, the initialization value of the tree construction T being a node with a least node ID in the table;
deleting a vertex from the tree construction T in the table;
determining a first vertex connected with T by tree edges in the table, appending the vertex to the tree construction T, and then deleting the vertex from the table; and
determining an order for selecting vertexes according to a branch order of a father node until the table is emptied.

5. The method for automatic protection switching of claim 4, wherein during appending every vertex, if a least difference between tree depths of different branches is 2, the tree is rotated to keep the tree balance; the order of branches after rotated is determined according to new tree structure.

6. The method for automatic protection switching of claim 2, wherein the step of presorting the minimum spanning tree further comprises the following steps of:
assigning root vertex of the minimum spanning tree as sequence number 0;
for any vertex beginning from the root vertex, exiting multiple branches from vertex with 0 branch subscript to maximum branch subscript;
processing presorting traversing to all branches circularly, namely traversing from branch subscript 0 to maximum gradually, in each branch, visiting branch subscript and subsequence, then keeping on loop called to subsequence, after traversing being completed, keeping on presorting traversing on a next branch; and
numbering vertexes beginning with the root vertex at firstly visiting.

7. The method for automatic protection switching of claim 2, wherein the step of assigning loop sequence numbers to non-tree edges further comprises the following steps of:
sorting non-tree edges according to weight {W_{lca}, s, l}, in which W_{lca} represents a presorted sequence number of a least common ancestor node, s is a lesser one of two node addresses connected by an edge, l is a larger one of two node addresses connected by the edge; and
arranging non-tree edges in an ascending order, their loop sequence numbers being defined as sequence numbers sorted in a serial.

8. The method for automatic protection witching of claim 2, wherein the step of assigning loop sequence numbers to tree edges further comprises the following steps of:
determining which loop consisting of no-tree edges is located by each tree edge; and
configuring a loop sequence number of a tree edge being equal to a loop sequence number of a least non-tree edge among the non-tree edges of the loop located by the tree edge.

9. The method for automatic protection switching of claim 1, wherein the step of processing ST numbering further comprises the following steps of:
determining node S and node T;
taking all nodes in a simple loop of loop decomposition as initial values of ST number sequence table with an order starting from node S and ending at node T through a long path;
appending all nodes on any other simple path, which already has two nodes in the sequence table, into the ST number sequence table with an order starting from a node having a less ST number and ending at a node having a larger ST number; and
forming ST sequence numbers by numbering nodes on the ST number sequence table in order.

10. The method for automatic protection switching of claim 1, wherein the step of establishing a S to T path and a T to S path further comprises the following steps of:
establishing a digraph (307);
establishing a S to T path by Dijkstra algorithm along an increase direction of ST sequence numbers for loop nodes of loop composition on the digraph;
establishing a T to S path by Dijkstra algorithm along an decrease direction of ST sequence numbers for loop nodes of loop composition on the digraph; and
wherein the principle for establishing the digraph is that a direction of a basic loop is form node T to node S, locating on a edge between node T and node S, and all other edges of the basic loop keep same direction to make the basic loop an oriented circuit; on all other loops, the direction is from a vertex with a less ST sequence number to a vertex with a larger ST sequence number.

11. The method for automatic protection switching of claim 1, wherein the information in a frame header comprises additional information of three bits:
S to T path bit, a frame being forwarded through a S to T path if the frame is configured with a S to T bit and received at a forwarding node;
T to S path bit, a frame being forwarded through a T to S path if the frame is configured with a T to S bit and received at a forwarding node
transfer path bit, if a transfer path bit is configured at node T, a T to S path being adopted, a T to S path bit being configured, and a S to T path bit being cleared; if a transfer path bit is configured at node S, a S to T path being adopted, a S to T path bit being configured, and a T to S path bit being cleared; on node T or node S, if a path transfer being completed, the path transfer bit being cleared.

12. The method for automatic protection switching of claim 1, wherein said modifying information in a frame header further comprises:
obtaining, when a network link fails, a ST sequence number of a protection switching node for detecting the failure, a ST sequence number of a destination node for the frame and a ST sequence number of the failure node or a ST sequence number of a far node along the failure link (1401);
determining whether the ST sequence number of the protection switching node is larger than the ST sequence number of the failure node or the ST sequence number of the far node along the failure link (1402);
if larger, determining whether the ST sequence number of the destination node for the frame is larger than the ST sequence number of the failure node or the ST sequence number of the far node along the failure link (1403);
if larger, configuring a S to T path bit and a transfer path bit in the frame header (1404), if the transfer path bit indicates the frame locates on node T, the frame is transferred to the T to S path;
if the ST sequence number of the destination node for the frame is less than the ST sequence number of the failure node or the ST sequence number of the far node along the failure link, configuring a S to T path bit in the frame header (1405);
if the ST sequence number of the protection switching node is less than the ST sequence number of the failure node or the ST sequence number of the far node along the failure link, and the ST sequence number of the destination node for the frame is less than the ST sequence number of the failure node or the ST sequence number of the far node along the failure link (1405), configuring a T to S path bit and a transfer path bit in the frame header (1407), if the transfer path bit indicates the frame locates on Node S, the frame is transferred to a S to T path;
if the ST sequence number of the destination node for the frame is larger than the ST sequence number of the failure node or the ST sequence number of the far node along the failure link, configuring a T to S path bit in the frame header (1408); and
if the ST sequence number of the destination node for the frame equals to the ST sequence number of the failure node or the ST sequence number of the far node along the failure link, while the ST sequence number of the protection switching node is less than the ST sequence number the failure node or the ST sequence number of the far node along the failure link, configuring T to S path bit in the frame header;
if the ST sequence number of the protection switching node is larger than the ST sequence number of the failure node or the ST sequence number of the far node along the failure link, configuring a S to T path bit in the frame header.

13. The method for automatic protection switching of claim 11, wherein said forwarding the frame according to the information in the frame header further comprises the following steps of:
determining, after the frame to be forwarded at a receiving node, whether the frame is on a protection path (1501) according to the additional information in the frame header for the frame;
if the frame is not on the protection path, forwarding the frame through a standard path by a standard forwarding table (1502); if the frame is on the protection path, determining whether the frame is on a S to T path (1503), if yes, determining whether the current node is node T (1504), if not node T, forwarding the frame by a S to T forwarding table (1505); if it is node T, determining whether the path needs change (1506), if needs not, forwarding the frame by a S to T forwarding table (1507); if needs change, forwarding the frame by a T to S forwarding table, and clearing transfer path bit in the frame header (1508); and
if the frame is on a T to S path, determining whether the current node is node S (1509), if yes, forwarding the frame by a T to S forwarding table (1510); if not node S, determining whether the path needs change (1511), if needs not change, forwarding the frame by the T to S forwarding table (1512); if needs change, forwarding the frame by a S to T forwarding table, and clearing transfer path bit in the frame header (1513).

14. The method for automatic protection switching of claim 13, wherein said forwarding the frame through a standard path by a standard forwarding table further comprises:
identifying a port by the standard forwarding table (1601), then determining whether the transmit port is normal (1602), if the port is normal, forwarding the frame to the port (1603); if the transmit port is abnormal, processing protection switching (1604), and then forwarding the frame (1605).

15. The method for automatic protection switching of claim 13, wherein said forwarding a frame by a T to S forwarding table further comprises:
identifying a port by the T to S forwarding table (1701), if the transmit port is normal (1702), forwarding the frame to the port (1703); if the transmit port is abnormal (1702), discarding the frame (1704).

16. The method for automatic protection switching of claim 13, wherein said forwarding a frame by a S to T forwarding table further comprises:
identifying a port by the S to T forwarding table (1801), if the transmit port is normal (1802), forwarding the frame to the port (1803); if the transmit port is abnormal (1802), discarding the frame (1804).

## Patentansprüche

1. Verfahren zum automatischen Schutzumschalten in einem Netzwerk, das Knoten und Verbindungen zwischen den Knoten umfasst, wenn eine Störung bei einem physikalischen Kanal zwischen den Knoten während einer Datenübertragung für einen Vorwärtspfad auftritt, der basierend auf Verbindungsstatusdaten von Routingprotokollen in einer Routingdatenbank aufgebaut wurde,
wobei das Verfahren von Dateneinrichtungen durchgeführt wird, und das Verfahren die folgenden Schritte aufweist:
Errichten von Protektionspfaden in dem Netzwerk (101);
Abändern der Informationen in einem Datenrahmenvorsatz bzw. Frame Header zum Weiterleiten eines Datenrahmens bzw. Frames (102), wenn eine Netzwerkverbindung ausfällt; und
Weiterleiten des Frames entsprechend der in dem Frame Header (103) enthaltenen Informationen, Weiterleiten des Frames über einen normalen Pfad, wenn die Information in dem Frame Header einen Normalzustand zeigen, und Weiterleiten des Frames über den Protektionspfad, wenn die Daten in dem Frame Header zeigen, dass eine Schutzumschaltung notwendig ist,
**dadurch gekennzeichnet, dass**
der Schritt des Errichtens von Protektionspfaden in einem Netzwerk des Weiteren folgende Schritte aufweist:
einen Verarbeitungsschritt der Schleifenzerlegung bzw. Loop Decomposition für ein topologische Diagramm des Netzwerks;
einen Verarbeitungsschritt der ST-Nummerierung, um jedem Knoten eine ST-Sequenznummer zu geben (306); und
einen Schritt des Aufbauens eines S zu T Pfades und eines T zu S Pfades (308).

2. Verfahren zum automatischen Schutzumschalten nach Anspruch 1, wobei der Verarbeitungsschritt der Schleifenzerlegung bzw. Loop Decomposition für ein topologisches Diagramm des Netzwerks des Weiteren folgende Schritte aufweist:
einen Schritt des Aufbauens eines minimalen Spannbaums bzw. Spanning Trees (301);
einen Schritt des Bestimmens einer Wurzel des minimalen Spanning Trees (302);
einen Schritt des Vorsortierens des minimalen Spanning Trees (303);
einen Schritt des Zuordnens von Schleifensequenznummern zu Nicht-Baumgrenzen (304); und
einen Schritt des Zuordnens von Schleifensequenznummern zu Baumgrenzen (305).

3. Verfahren zum automatischen Schutzumschalten nach Anspruch 2, wobei der Schritt des Errichtens eines minimalen Spanning Trees des Weiteren die folgenden Schritte aufweist:
Definieren einer Grenzgewichtung als eine Triade {w, s, l}, wobei w eine Verbindungsgewichtung ist, die für ein Routingprotokoll basierend auf dem Verbindungszustand verwendet wird, s eine kleinere der beiden Knotenadressen ist, die durch die Grenze verbunden sind, und l die größere der beiden Knotenadressen ist, die durch die Grenze miteinander verbunden sind;
und
Aufbauen des minimalen Spanning Trees gemäß dem Shortest Path First Algorithmus.

4. Verfahren zum automatischen Schutzumschalten nach Anspruch 2, wobei der Schritt des Bestimmens einer Wurzel des minimalen Spanning Trees des Weiteren folgende Schritte aufweist:
Sortieren aller Knoten in einer aufsteigenden Reihenfolge gemäß der Knoten IDs, um eine Tabelle von sortierten Knoten zu bilden;
Initialisieren einer Baumstruktur T mit einer niedrigsten Knoten ID in der Tabelle, wobei der Initialisierungswert der Baumstruktur T ein Knoten mit einer niedrigsten Knoten ID in der Tabelle ist;
Löschen eines Scheitelpunkts aus der Baumstruktur in der Tabelle;
Bestimmen eines ersten Scheitelpunkts, der mit T durch die Baumgrenzen in der Tabelle verbunden ist, Anhängen des Scheitelpunkts an die Baumstruktur T, und anschließendes Löschen des Scheitelpunkts aus der Tabelle; und
Bestimmen einer Reihenfolge zum Auswählen von Scheitelpunkten gemäß einer Verzweigungsreihenfolge eines Vaterknotens, bis die Tabelle geleert ist.

5. Verfahren zum automatischen Schutzumschalten nach Anspruch 4, wobei während des Anhängens von jedem Scheitelpunkt, wenn eine geringste Differenz zwischen den Baumtiefen von unterschiedlichen Verzweigungen zwei ist, der Baum gedreht wird, um das Baumgleichgewicht zu erhalten; wobei die Reihenfolge der Verzweigungen nach dem Rotation entsprechend der neuen Baumstruktur bestimmt wird.

6. Verfahren zum automatischen Schutzumschalten nach Anspruch 2, wobei der Schritt des Vorsortierens des minimalen Spanning Trees weiterhin folgende Schritte aufweist:
Zuordnen des Wurzelscheitelpunktes des minimalen Spanning Trees als Sequenznummer 0;
Für einen beliebigen Scheitelpunkt, der von dem Wurzelscheitelpunkt beginnt, Verlassen von multiplen Verzweigungen von dem Scheitelpunkt mit dem Verzweigungssubscript 0 bis zu dem maximalen Verzweigungssubscript;
Verarbeiten von einem vorsortierenden Überspannen, kreisförmig zu allen Verzweigungen, nämlich Überspannen von dem Verzweigungssubscript 0 schrittweise bis zum Maximum in jedem Zweig, wobei das Verzweigungssubscript und die -subsequenz inspiziert wird, anschließend Aufrechterhalten der Schleife aufgerufen zur Subsequenz, nachdem das Überspannen abgeschlossen ist Aufrechterhalten der Vorsortierung des Überspannens bei einer nächsten Verzweigung; und
Nummerieren der Scheitelpunkte beginnend mit dem Wurzelscheitelpunkt beim ersten Inspizieren.

7. Verfahren zum automatischen Schutzumschalten nach Anspruch 2, wobei der Schritt des Zuordnens von Schleifensequenznummern zu Nicht-Baumgrenzen des Weiteren die folgenden Schritte aufweist:
Sortieren von Nicht-Baumgrenzen gemäß der Gewichtung {w_{lca}, s, l}, wobei w_{lca} eine vorsortierte Sequenznummer eines niedrigsten gemeinsamen Vorfahr-Knotens (Lowest Common Ancestor lca) darstellt, s der Wert von zwei Knotenadressen ist, die durch eine Grenze miteinander verbunden sind, sowie l der größere Wert von zwei Knotenadressen ist, die durch eine Grenze verbunden sind; und
Anordnen von Nicht-Baumgrenzen in einer aufsteigenden Reihenfolge, wobei ihre Schleifensequenznummern als Sequenznummern definiert sind, die in einer Reihe sortiert sind.

8. Verfahren zum automatischen Schutzumschalten nach Anspruch 2, wobei der Schritt des Zuordnens von Schleifensequenznummern zu Baumgrenzen weiterhin die folgenden Schritte umfasst:
Bestimmen, welche Schleife, die aus Nicht-Baumgrenzen besteht, bei jeder Baumgrenze angeordnet ist; und
Konfigurieren einer Schleifensequenznummer einer Baumgrenze, die gleich einer Schleifensequenznummer einer geringsten Nicht-Baumgrenze ist, unter den Nicht-Baumgrenzen der Schleife, die an der Baumgrenze angeordnet sind.

9. Verfahren zum automatischen Schutzumschalten nach Anspruch 1, wobei der Schritt des Verarbeitens der ST Nummerierung des Weiteren folgende Schritte aufweist:
Bestimmen des Knotens S und des Knotens T;
Nehmen aller Knoten in einer einfachen Schleife einer Schleifenzerlegung bzw. Loop Decomposition als Anfangswerte einer ST Nummernsequenztabelle in der Reihenfolge beginnend vom Knoten S und endend am Knoten T über einen langen Pfad;
Hinzufügen aller Knoten zu jedem anderen einfachen Pfad, der bereits zwei Knoten in der Sequenztabelle aufweist, in die ST-Nummernsequenztabelle in einer Reihenfolge, die bei einem Knoten beginnt, der eine geringere ST Nummer aufweist und an einem Knoten mit einer größeren ST Nummer endet; und
Bilden von ST Sequenznummern durch Nummerieren der Knoten in der ST Nummernsequenztabelle in Reihenfolge.

10. Verfahren zum automatischen Schutzumschalten nach Anspruch 1, wobei der Schritt des Aufbauens eines S zu T Pfades und eines T zu S Pfades des Weiteren die folgenden Schritte aufweist:
Aufbauen eines Digraphen (307);
Aufbauen eines S zu T Pfades mittels dem Dijkstra Algorithmus entlang einer Zunahmerichtung von ST Sequenznummern für Schleifenknoten des Schleifenaufbaus auf dem Digraph;
Aufbauen eines T zu S Pfades mittels dem Dijkstra Algorithmus entlang einer Abnahmerichtung von ST Sequenznummern für Schleifenknoten des Schleifenaufbaus auf dem Diagraph; und
wobei das Prinzip des Aufbauens des Digraphen das ist, dass eine Richtung einer Grundschleife von dem Knoten T zu dem Knoten S ist, Plazieren auf einer Grenze zwischen dem Knoten T und dem Knoten S, und alle weiteren Grenzen der Grundschleife behalten die selbe Richtung bei, um die Grundschleife zu einem gerichteten Kreis zu machen; bei allen anderen Schleifen ist die Richtung von einem Scheitelpunkt mit einer geringeren ST Sequenznummer zu einem Scheitelpunkt mit einer größeren ST Sequenznummer.

11. Verfahren zum automatischen Schutzumschalten nach Anspruch 1, wobei die Daten in einem Frame Header Zusatzdaten von drei Bits aufweisen:
ein S zu T Pfad-Bit, wobei ein Frame über einen S zu T Pfad weitergeleitet wird, wenn der Frame mit einem S zu T Bit konfiguriert ist und an einem Vorwärtsknoten empfangen wird;
ein T zu S Pfad-Bit, wobei eine Frame über einen T zu S Pfad weitergeleitet wird, wenn der Frame mit einem T zu S Bit konfiguriert ist und an einem Vorwärtsknoten empfangen wird; und
ein Transfer-Pfad-Bit, wobei, wenn ein Transfer-Pfad-Bit bei dem Knoten T konfiguriert ist, ein T zu S Pfad verwendet wird, wobei ein T zu S Pfad-Bit konfiguriert wird und ein S zu T Pfad-Bit gelöscht wird; wenn eine Transfer-Pfad-Bit bei einem Knoten S konfiguriert ist, ein S zu T Pfad verwendet wird, wobei ein S zu T Pfad-Bit konfiguriert wird und ein T zu S Pfad-Bit gelöscht wird; wobei auf dem Knoten T oder auf dem Knoten S das Pfad-Transfer-Bit gelöscht wird, wenn ein Pfad-Transfer abgeschlossen ist.

12. Verfahren zum automatischen Schutzumschalten nach Anspruch 1, wobei das Verändern der Daten in einem Frame Header des Weiteren umfasst:
Ermitteln, wenn eine Netzwerkverbindung ausfällt, einer ST Sequenznummer eines Schutzumschaltknotens zum Erfassen der Störung einer ST Sequenznummer eines Zielknotens für einen Frame und einer ST Sequenznummer des Störungsknotens oder einer ST Sequenznummer eines fernen Knotens entlang der Störverbindung (1401;
Bestimmen, ob die ST Sequenznummer des Schutzumschaltknotens größer ist als die ST Sequenznummer des Störknotens oder die ST Sequenznummer des fernen Knotens entlang der Störverbindung (1402);
falls sie größer ist, Bestimmen, ob die ST Sequenznummer des Zielknotens für den Frame größer ist als die ST Sequenznummer des Störknotens oder die ST Sequenznummer des fernen Knotens entlang der Störverbindung (1403);
falls sie größer ist, Konfigurieren eines S zu T Pfad-Bits und eines Transfer-Pfad-Bits in dem Frame Header (1404), wenn das Transfer-Pfad-Bit anzeigt, dass der Frame auf dem Knoten T angeordnet ist, wird der Frame zu dem T zu S Pfad transferiert;
wenn die ST Sequenznummer des Zielknotens geringer ist als die ST Sequenznummer des Störknotens oder die ST Sequenznummer des fernen Knotens entlang der Störverbindung, Konfigurieren eines S zu T Pfad-Bits in dem Frame Header (1405);
wenn die ST Sequenznummer des Schutzumschaltknotens geringer ist als die ST Sequenznummer des Störknotens oder die ST Sequenznummer des fernen Knotens entlang der Störverbindung, und die ST Sequenznummer des Zielknotens für den Frame geringer ist als die ST Sequenznummer des Störknotens oder die ST Sequenznummer des fernen Knotens entlang der Störverbindung (1406), Konfigurieren eines T zu S Pfad-Bits und eines Transfer-Pfad-Bits in dem Frame Header (1407), wenn das Transfer-Pfad-Bit anzeigt, dass der Frame auf dem Knoten S angeordnet ist, wird der Frame zu einem S zu T Pfad transferiert;
wenn die ST Sequenznummer des Zielknotens für den Frame größer ist als die ST Sequenznummer des Störknotens oder die ST Sequenznummer des fernen Knotens entlang der Störverbindung, Konfigurieren eines T zu S Pfad-Bits in dem Frame Header (1408); und
wenn die ST Sequenznummer des Zielknotens für den Frame gleich der ST Sequenznummer des Störknotens oder der ST Sequenznummer des fernen Knotens entlang der Störverbindung ist, wobei die ST Sequenznummer des Schutzumschaltknotens geringer ist als die ST Sequenznummer des Störknotens oder die ST Sequenznummer des fernen Knotens entlang der Störverbindung, Konfigurieren des S zu T Pfad-Bits in dem Frame Header; wenn die ST Sequenznummer des Schutzumschaltknotens größer ist als die ST Sequenznummer des Störknotens oder die ST Sequenznummer des Störknotens oder die ST Sequenznummer des fernen Knotens entlang der Störverbindung, Konfigurieren eines S zu T Pfad-Bits in dem Frame Header.

13. Verfahren zum automatischen Schutzumschalten nach Anspruch 11, wobei das Weiterleiten des Frames entsprechend der Daten in dem Frame Header des Weiteren die folgenden Schritte aufweist:
Bestimmen, nach dem Frame, der an einen Empfangsknoten weiterzuleiten ist, ob der Frame sich auf einem Protektionspfad oder Schutzpfad (1501) entsprechend der zusätzlichen Daten in dem Frame Header für den Frame befindet;
wenn sich der Frame nicht auf dem Protektionspfad befindet, Weiterleiten des Frames über einen Standardpfad über eine Standardweiterleitungstabelle (1502); wenn der Frame sich auf einem Protektionspfad befindet, Bestimmen, ob der Frame sich auf einem S zu T Pfad befindet (1503), falls ja, Bestimmen ob der aktuelle Knoten der Knoten T ist (1504), wenn es nicht der Knoten T ist, Weiterleiten des Frames durch eine S zu T Weiterleitungs-tabelle (1505); wenn es der Knoten T ist, Bestimmen, ob der Pfad geändert werden muss (1506), wenn er nicht geändert werden muss, Weiterleiten des Frames durch eine S zu T Weiterleitungstabelle (1507); wenn eine Änderung erforderlich ist, Weiterleiten des Frames durch eine T zu S Weiterleitungstabelle, und Löschen des Transfer-Pfad-Bits in dem Frame Header (1508); und
wenn der Frame sich auf einem T zu S Pfad befindet, Bestimmen, ob der aktuelle Knoten ein Knoten S ist (1509), falls ja, Weiterleiten des Frames durch eine T zu S Weiterleitungstabelle (1510); wenn der Knoten nicht S ist, Bestimmen, ob der Pfad geändert werden muss (1511), wenn er nicht geändert werden muss, Weiterleiten des Frames durch eine T zu S Weiterleitungstabelle (1512); wenn er geändert werden muss, Weiterleiten des Frames durch eine S zu T Weiterleitungstabelle und Löschen des Transfer-Pfad-Bits in dem Frame Header (1513).

14. Verfahren zum automatischen Schutzumschalten nach Anspruch 13, wobei das Weiterleiten des Frames über einen Standardpfad durch eine Standardweiterleitungstabelle des Weiteren umfasst:
Identifizieren eines Ports durch die Standardweiterleitungstabelle (1601), anschließendes Bestimmen, ob der Übertragungsport normal ist (1602), wenn der Port normal ist, Weiterleiten des Frames an den Port (1603); wenn der Übertragungsport unnormal ist, Verarbeiten der Schutzumschaltung (1604), und anschließend Weiterleiten des Frames (1605).

15. Verfahren zum automatischen Schutzumschalten nach Anspruch 13, wobei das Weiterleiten eines Frames durch eine T zu S Weiterleitungstabelle weiterhin aufweist:
Identifizieren eines Ports durch die T zu S Weiterleitungstabelle (1701), ob der Übertragungsport normal ist (1702), Weiterleiten des Frames an den Port (1703); wenn der Weiterleitungsport unnormal ist (1702), Verwerfen des Frames (1704).

16. Verfahren zum automatischen Schutzumschalten nach Anspruch 13, wobei das Weiterleiten eines Frames durch eine S zu T Weiterleitungstabelle des Weiteren aufweist:
Identifizieren eines Ports durch die S zu T Weiterleitungstabelle (1801), wenn der Übertragungsport normal ist (1802), Weiterleiten des Frames an den Port (1803); wenn der Übertragungsport unnormal ist (1802), Verwerfen des Frames (1804).

## Revendications

1. Procédé pour une commutation automatique de protection dans un réseau comprenant des noeuds et des liens entre des noeuds lorsqu'une défaillance survient dans un canal physique entre les noeuds pendant une transmission de données pour un trajet de transfert établi sur la base d'informations d'état de lien de protocoles de routage dans une base de données de routage, le procédé étant mis en oeuvre par un équipement de données, et le procédé comprenant les étapes suivantes consistant à :
établir des trajets de protection dans le réseau (101) ;
modifier des informations dans un en-tête de trame pour transférer une trame (102), lorsqu'un lien du réseau est défaillant ; et
transférer la trame conformément aux informations contenues dans l'en-tête de trame (103), si les informations contenues dans l'en-tête de trame montrent un état normal, transférer la trame via un trajet normal, et si les informations dans l'en-tête de trame montrent qu'une commutation de protection est nécessaire, transférer la trame par le trajet de protection, **caractérisé en ce que**
l'étape consistant à établir des trajets de protection dans un réseau comprend en outre les étapes suivantes :
une étape consistant à exécuter une décomposition en boucle pour un graphe topologique du réseau ;
une étape consistant à exécuter une numérotation ST pour donner à chaque noeud un numéro de séquence ST (306) ; et
une étape consistant à établir un trajet de S à T et un trajet de T à S (308).

2. Procédé pour une commutation automatique de protection selon la revendication 1, dans lequel l'étape d'exécution d'une décomposition en boucle pour un graphe topologique du réseau comprend en outre les étapes suivantes :
une étape consistant à établir une arborescence de recouvrement minimale (301) ;
une étape consistant à déterminer une racine de l'arborescence de recouvrement minimale (302) ;
une étape consistant à pré-trier l'arborescence de recouvrement minimale (303) ;
une étape consistant à attribuer des numéros de séquence de boucle à des arêtes hors de l'arborescence (304) ; et
une étape consistant à attribuer des numéros de séquence de boucle à des arêtes de l'arborescence (305).

3. Procédé pour une commutation automatique de protection selon la revendication 2, dans lequel l'étape consistant à établir une arborescence de recouvrement minimale comprend en outre les étapes suivantes consistant à :
définir un poids d'arête sous forme d'une triade (w, s, l), dans laquelle w est un poids de lien utilisé pour un protocole de routage sur la base d'un état de lien, s est la plus petite de deux adresses de noeuds reliés par l'arête, et l est la plus grande des deux adresses de noeuds reliés par l'arête ; et
établir l'arborescence de recouvrement minimale conformément à un algorithme de premier trajet le plus court.

4. Procédé pour une commutation automatique de protection selon la revendication 2, dans lequel l'étape de détermination d'une racine de l'arborescence de recouvrement minimale comprend en outre les étapes suivantes consistant à :
trier tous les noeuds dans un ordre croissant conformément aux identifications de noeuds pour former un tableau de noeuds triés ;
initialiser une construction d'arborescence T ayant un identificateur de noeud le plus petit dans le tableau, la valeur d'initialisation de la construction d'arborescence T étant un noeud avec un identificateur de noeud le plus petit dans le tableau ;
supprimer un sommet de la structure d'arborescence T dans le tableau ;
déterminer un premier sommet relié à T par des arêtes d'arborescence dans le tableau, ajouter le sommet à la structure d'arborescence T, et supprimer ensuite le sommet du tableau ; et
déterminer un ordre pour sélectionner des sommets conformément à un ordre de branche d'un noeud père jusqu'à ce que le tableau soit vide.

5. Procédé pour une commutation automatique de protection selon la revendication 4, dans lequel pendant l'ajout de chaque sommet, si la plus petite différence entre des profondeurs d'arborescence de branches différentes est égale à 2, l'arborescence est tournée pour conserver l'équilibre de l'arborescence ; l'ordre des branches après la rotation est déterminé conformément à la nouvelle structure d'arborescence.

6. Procédé pour une commutation automatique de protection selon la revendication 2, dans lequel l'étape de pré-triage de l'arborescence de recouvrement minimale comprend en outre les étapes suivantes consistant à :
attribuer un sommet racine à l'arborescence de recouvrement minimale en tant que numéro de séquence 0 ;
pour tout sommet commençant à partir du sommet racine, sortir une multiplicité de branches depuis le sommet ayant un indice de branche égal à zéro jusqu'à un indice de branche maximum ;
effectuer un pré-triage en balayant toutes les branches de manière circulaire, à savoir en balayant depuis l'indice de branche 0 graduellement jusqu'à l'indice de branche maximum, dans chaque branche, visiter un indice de branche et le suivant, conserver ensuite la boucle appelée à la suite, après avoir terminé le balayage, en continuant le pré-triage lors du balayage vers une branche suivante ; et
numéroter les sommets en commençant avec le sommet racine lors de la première visite.

7. Procédé pour une commutation automatique de protection selon la revendication 2, dans lequel l'étape consistant à attribuer des numéros de séquence de boucle à des arêtes hors de l'arborescence comprend en outre les étapes suivantes consistant à :
trier les arêtes hors de l'arborescence conformément à un poids (Wics, s, l), dans lequel Wics représente un numéro de séquence prétrié d'un ancêtre le plus petit commun, s est la plus petite de deux adresses de noeuds reliés par une arête, et l est la plus grande des deux adresses de noeuds reliés par l'arête ; et
arranger des arêtes hors de l'arborescence dans un ordre croissant, leurs numéros de séquence de boucle étant définis en tant que numéros de séquence triés en série.

8. Procédé pour une commutation automatique de protection selon la revendication 2, dans lequel l'étape consistant à attribuer des numéros de séquence de boucle à des arêtes de l'arborescence comprend en outre les étapes suivantes consistant à :
déterminer quelle boucle constituée d'arêtes hors de l'arborescence est localisée par chaque arête de l'arborescence ; et
configurer un numéro de séquence de boucle d'une arête de l'arborescence étant égal à un numéro de séquence de boucle d'une arête étant la moins hors de l'arborescence parmi les arêtes hors de l'arborescence de la boucle localisée par l'arête d'arborescence.

9. Procédé pour une commutation automatique de protection selon la revendication 1, dans lequel l'étape consistant à traiter une numérotation ST comprend en outre les étapes suivantes consistant à :
déterminer un noeud S et un noeud T ;
prendre tous les noeuds dans une boucle simple de décomposition en tant que valeurs initiales d'un tableau de séquence de numéro ST dans un ordre commençant à partir du noeud S et se terminant au noeud T via un long trajet ;
ajouter tous les noeuds sur un quelconque autre trajet simple, lequel a déjà deux noeuds dans le tableau de séquence, dans le tableau de séquence de numéro ST dans un ordre commençant à partir d'un noeud ayant un numéro ST le plus petit et se terminant à un noeud ayant un numéro ST le plus grand ; et
former des numéros de séquence ST en numérotant les noeuds sur le tableau de séquence de numéro ST dans l'ordre.

10. Procédé pour une commutation automatique de protection selon la revendication 1, dans lequel l'étape consistant à établir un trajet de S à T et un trajet de T à S comprend en outre les étapes suivantes consistant à :
établir un graphe orienté (307) ;
établir un trajet de S à T par un algorithme de Dijkstra le long d'une direction d'augmentation de numéros de séquence ST pour des noeuds de boucle de composition sur le graphe orienté ;
établir un trajet de T à S par l'algorithme de Dijkstra le long d'une direction de diminution de numéros de séquence ST pour des noeuds de boucle de composition en boucle sur le graphe orienté ; et
dans lequel le principe pour établir le graphe orienté est tel qu'une direction d'une boucle de base va d'un noeud T à un noeud S, situé sur une arête entre le noeud T et le noeud S, et toutes les autres arêtes de la boucle de base conservent la même direction pour que la boucle de base devienne un circuit orienté ; sur toutes les autres boucles, la direction va d'un sommet ayant un numéro de séquence ST inférieur à un sommet ayant un numéro de séquence ST supérieur.

11. Procédé pour une commutation automatique de protection selon la revendication 1, dans lequel les informations dans un en-tête de trame comprennent des informations additionnelles sur trois bits :
un bit de trajet de S à T, une trame étant acheminée via un trajet de S à T si la trame est configurée avec un bit de S à T et reçue au niveau d'un noeud de transfert ;
un bit de trajet de T à S, une trame étant acheminée via un trajet de T à S si la trame est configurée avec un bit de T à S et reçue au niveau d'un noeud de transfert ;
un bit de trajet de transfert, si un bit de trajet de transfert est configuré au noeud T, un trajet de T à S étant adopté, un bit de trajet de T à S étant configuré, et un bit de trajet S à T étant effacé ; si un bit de trajet de transfert est configuré au noeud S, un trajet de S à T étant adopté, un bit de trajet de S à T étant configuré, et un bit de trajet de T à S étant effacé ; sur un noeud T ou un noeud S, si un transfert de trajet est terminé, le bit de transfert de trajet étant effacé.

12. Procédé pour une commutation automatique de protection selon la revendication 1, dans lequel la modification des informations dans un en-tête de trame comprend en outre les étapes consistant à :
obtenir, lorsqu'un lien de réseau est défaillant, un numéro de séquence ST d'un noeud de commutation de protection pour détecter la défaillance, un numéro de séquence ST d'un noeud de destination pour la trame et un numéro de séquence ST du noeud défaillant ou un numéro de séquence ST d'un noeud éloigné le long du lien défaillant (1401) ;
déterminer si le numéro de séquence ST du noeud de commutation de protection est supérieur au numéro de séquence ST du noeud défaillant ou au numéro de séquence ST du noeud éloigné le long du lien défaillant (1402) ;
s'il est supérieur, déterminer si le numéro de séquence ST du noeud de destination pour la trame est supérieur au numéro de séquence ST du noeud défaillant ou au numéro de séquence ST du noeud éloigné le long du lien défaillant (1403) ;
s'il est supérieur, configurer un bit de trajet de S à T et un bit de trajet de transfert dans l'en-tête de trame (1404), si le bit de trajet de transfert indique que la trame se situe sur le noeud T, la trame est transférée vers le trajet de T à S ;
si le numéro de séquence ST d'une de destination pour la trame est inférieur au numéro de séquence ST du noeud défaillant ou au numéro de séquence ST du noeud éloigné le long du lien défaillant, configurer un bit de trajet de S à T dans l'en-tête de trame (1405) ;
si le numéro de séquence ST du noeud de commutation de protection est inférieur au numéro de séquence ST du noeud défaillant ou au numéro de séquence ST du noeud éloigné le long du lien défaillant, et le numéro de séquence ST du noeud de destination pour la trame est inférieur au numéro de séquence ST du noeud défaillant ou au numéro de séquence ST du noeud éloigné le long du lien défaillant (1405), configurer un bit de trajet de T à S et un bit de trajet de transfert dans l'en-tête de trame (1407), si le bit de trajet de transfert indique que la trame se situe sur le noeud S, la trame est transférée vers un trajet de S à T ;
si le numéro de séquence ST du noeud de destination pour la trame est supérieur au numéro de séquence ST du noeud défaillant ou au numéro de séquence ST du noeud éloigné le long du lien défaillant, configurer un bit de trajet de T à S dans l'en-tête de trame (1408) ; et
si le numéro de séquence ST du noeud de destination pour la trame est égal au numéro de séquence ST du noeud défaillant ou au numéro de séquence ST du noeud éloigné le long du lien défaillant, alors que le numéro de séquence ST du noeud de commutation de protection est inférieur au numéro de séquence ST du noeud défaillant ou au numéro de séquence ST du noeud éloigné le long du lien défaillant, configurer un bit de trajet de T à S dans l'en-tête de trame ;
si le numéro de séquence ST du noeud de commutation de protection est supérieur au numéro de séquence ST du noeud défaillant ou au numéro de séquence ST du noeud éloigné le long du lien défaillant, configurer un bit de trajet de S à T dans l'en-tête de trame.

13. Procédé pour une commutation de protection automatique selon la revendication 1, dans lequel ledit transfert de trame conformément aux informations contenues dans l'en-tête de trame comprend en outre les étapes suivantes consistant à :
déterminer, une fois que la trame à envoyer se trouve à un noeud de réception, si la trame est sur un trajet de protection (1501) conformément aux informations additionnelles dans l'en-tête de trame pour la trame ;
si la trame n'est pas sur le trajet de protection, transférer la trame via un trajet standard par l'intermédiaire d'un tableau de transfert standard (1502) ; si la trame est sur le trajet de protection, déterminer si la trame est sur un trajet de S à T (1503), si la réponse est oui, déterminer si le noeud courant est le noeud T (1504) ; s'il ne s'agit pas du noeud T, transférer la trame par un tableau de transfert de S à T (1505) ; s'il s'agit du noeud T, déterminer si le trajet a besoin de changement (1506), s'il n'en a pas besoin, transférer la trame par un tableau de transfert de S à T (1507) ; s'il a besoin d'un changement, transférer la trame par un tableau de transfert de T à S, et effacer le bit de trajet de transfert dans l'en-tête de trame (1508) ; et
si la trame est sur un trajet de T à S, déterminer si le noeud courant est le noeud S (1509), si la réponse est oui, transférer la trame par un tableau de transfert de T à S (1510) ; s'il ne s'agit pas du noeud S, déterminer si le trajet a besoin de changement (1511), s'il n'a pas besoin de changement, transférer la trame par le tableau de transfert de T à S (1512) ; s'il a besoin de changement, transférer la trame par un tableau de transfert de S à T, et effacer le bit de trajet de transfert dans l'en-tête de trame (1513).

14. Procédé pour une commutation de protection automatique selon la revendication 13, dans lequel ledit transfert de la trame via un trajet standard par un tableau de transfert standard comprend en outre les étapes consistant à :
identifier un port par le tableau de transfert standard (1601), déterminer ensuite si le port de transmission est normal (1602), si le port est normal, transférer la trame vers le port (1603) ; si le port de transmission est anormal, effectuer une commutation de protection (1604), et transférer ensuite la trame (1605).

15. Procédé pour une commutation de protection automatique selon la revendication 13, dans lequel ledit transfert d'une trame par un tableau de transfert de T à S comprend en outre les étapes consistant à :
identifier un port par le tableau de transfert de T à S (1701), si le port de transmission est normal (1700), transférer la trame vers le port (1703) ; si le port de transmission est anormal (1702), rejeter la trame (1704).

16. Procédé pour une commutation de protection automatique selon la revendication 13, dans lequel ledit transfert d'une trame par un tableau de transfert de S à T comprend en outre :
l'identification d'un port par le tableau de transfert de S à T (1801), si le port de transmission est normal (1802), transférer la trame vers le port (1803) ; si le port de transmission est anormal (1802), rejeter la trame (1804).
